# EUROPEAN PATENT APPLICATION

(11) **EP 3 632 855 A1**
(43) Date of publication of application: **08.04.2020**
(21) Application number: 18198304.0
(22) Date of filing: 02.10.2018
(51) Int. Cl.: C02F 1/42, C02F 1/28, B01J 20/04, B01J 20/06, B01J 20/08, B01J 20/18, B01J 20/20, B01J 20/10, B01J 41/04

(54) **A METHOD FOR PROVIDING AQUEOUS COMPOSITIONS WITH REDUCED CONTENT OF ORGANIC FLUORINATED COMPOUNDS**

(71) Applicant: SOLVAY SA, 1120 Brussels (BE); RHODIA OPERATIONS, 75009 Paris (FR)
(72) Inventor: KHIRANI, Sarah, 69003 LYON (FR); ANTOINETTE, Yves, 01480 Villeneuve (FR); DODOUCHE, Ibrahim, 69800 Saint-Priest (FR)
(74) Representative: Mross, Stefan P.M.

(57) **Abstract**

The invention relates to a method for providing aqueous compositions with reduced content of fluorosubstituted organic acids and/or fluorinated surfactants.

## Description

The invention relates to a method for providing aqueous compositions with reduced content of fluorosubstituted organic acids and/or fluorinated surfactants.

Fluorosubstituted organic acid and fluorinated surfactants often are potential pollutants in industrial waste compositions, in particular aqueous waste composition. Fluorosubstituted organic acid can be an oxidation product of fluorohydrocarbons in the environment, and are also detected in aqueous compositions in the environment. Fluorinated surfactants are, for example, auxiliary compounds in polymer manufacturing in emulsion polymerization to produce fluoropolymers.

Trifluoroacetic acid, for example, is an oxidation product of tetrafluoroethane. It is, for example, a potential hydrolytic product of trifluoroacetyl halides produced or used in chemical synthesis.

It is generally considered to be favourable that the introduction of fluorosubstituted acetic acids, in particular trifluoroacetic acid (TFA), higher homologues of TFA and/or fluorinated surfactants into the environment, for example by wastewater, should be low, and it is desirable to recover such acids and/or fluorinated surfactants from aqueous waste streams. US patent 5,236,597 provides a method for the sorption of halogenated C1 to C3 alkyl acids from aqueous solutions by contact with rubber. The examples are operated with an aqueous solution comprising 50 % by weight or even 99.9 % by weight. Often, waste streams of industrial manufacturing processes have a significantly lower content of fluorosubstituted organic acids and/or fluorinated surfactants, for example already reduced by a previous content reduction step, and there is an ongoing need for improved processes in order to effectively reduce further the content of fluorosubstituted organic acid and/or fluorinated surfactants in aqueous compositions.

The invention thus concerns a method for providing an aqueous composition B with a reduced content of at least one compound D selected from carboxylic acids having the formula (I) R-C(O)OH wherein R is selected from the group consisting of C1 to C9 alkyl groups substituted by at least 1 fluorine atom and fluorinated surfactants, wherein the method comprises at least one step wherein an aqueous composition A with a first content of at least one compound D selected from carboxylic acids of formula (I) and fluorinated surfactants is contacted with at least one adsorbant substance selected from ion exchange resins, zeolites, silica, Al₂O₃, TiO₂, activated carbon and CaCO₃ to obtain an aqueous composition B with a second, reduced content of at least one compound D having the formula (I) R-C(O)OH and/or a fluorinated surfactant. Another object of the present invention is a process for the manufacture of a chemical compound C comprising a step in which an aqueous composition A is formed as a secondary product, and which further comprises the method for providing an aqueous composition with a reduced content of at least one compound D selected from carboxylic acids having the formula (I) R-C(O)OH wherein R is selected from the group consisting of C1 to C9 alkyl groups substituted by at least 1 fluorine atom and fluorinated surfactants.

In the context of the present invention, the singular form is intended also to include the plural. For example, the term "a compound of formula (I)" is intended to include two or more compounds of formula (I). All aspects and embodiments of the present invention are combinable. In the context of the present invention, the term "comprising" is intended to include the meaning of "consisting of' and "consisting essentially of'. Endpoints of ranges are also included in the disclosure, e.g. a particle size of from 1 to 100 µm includes the values 1 and 100.

In one aspect of the present invention, the invention concerns a method for providing an aqueous composition B with a reduced content of at least one compound D selected from the group consisting of carboxylic acids having the formula (I) R-C(O)OH wherein R is selected from the group consisting of C1 to C9 alkyl groups substituted by at least 1 fluorine atom and fluorinated surfactants, wherein the method comprises at least one step wherein an aqueous composition A with a first content of at least one compound D is contacted with at least one adsorbant substance selected from ion exchange resins, zeolites, silica, Al₂O₃, TiO₂, activated carbon and CaCO₃ to obtain an aqueous composition B with a second, reduced content of at least one compound D. The term "second, reduced content" intends to denote that the content of the at least one compound D in aqueous composition B is lower compared to the content of the at least one compound D in aqueous composition A. The content can be expressed, for example, in g/mL, in % (percent) by weight percent, or ppm, wherein ppm relates to mass fraction.

The term "C1 to C9 alkyl group" is intended to denote straight, branched or cyclic alkyl groups having one to nine carbon atoms. The group comprises, for example methyl, ethyl, n-propyl, isopropyl, n-, iso-, sec- and t-butyl, n-nonyl and its isomers, n-pentyl and its isomers, n-hexyl and its isomers, 1,3-dimethylbutyl, 3,3-dimethylbutyl, n-heptyl and its isomers and n-octyl and its isomers. In one aspect, compound D is a fluorinated carboxylic acid having the formula (I) R-C(O)OH. Preferably, R is a C1 to C3 alkyl group substituted by at least 1 fluorine atom, wherein more preferably R is methyl or ethyl. R can, apart from the substitution with at least one fluorine atom, be substituted with one or more substituents selected from the group Br, Cl, CN, OH or SH. In a further preferred aspect of the present invention, R is selected from the group consisting of C1 alkyl substituted by 2 or 3 fluorine atoms, C2 alkyl substituted by at least 3 fluorine atoms or C3 alkyl substituted by at least 4 fluorine atoms, preferably wherein R is selected from the group consisting of CF₃, C₂F₅ and C₃F₈. In a more preferred aspect of the present invention, R is CF₃.

In another preferred aspect of the present invention, R in the formula (I) is selected from the group consisting of C5 alkyl and C6 alkyl group substituted by at least six fluorine atoms. R can, apart from the substitution with at least six fluorine atoms, be substituted with one or more substituents selected from the group Br, Cl, CN, OH or SH. It is preferred that R is exclusively substituted by fluorine and hydrogen, and more preferred that R is perfluorinated, and R is C₅F₁₁ or C₆F₁₃. When R is not perfluorinated, other substituents which the C5 or C6 alkyl group is substituted, additionally to hydrogen atoms, are halogen substituents, preferably chlorine.

According to one aspect of the present invention, the at least one adsorbant substance is an ion exchange resin. It can be advantageous when the ion exchange resin is a basic ion exchange resin. It is further preferred if the ion-exchange resin has a macroporous pore type. Generally, ion-exchange resins with a polyacrylic or polystyrene-DVB (divinylbenzene) matrix are preferred. Examples include Duolite™ A-368, Duolite™ A-378, Duolite™ A-375, DIAION™ WA20, WA21J, WA30, Purolite® A835 and Purolite® 100.

According to a further aspect of the present invention, the at least one adsorbant substance is selected from the group consisting of zeolites, silica, Al₂O₃ and TiO₂.

When the at least one adsorbant is a zeolite, it is preferred that the BET (Brunauer-Emmett-Teller) value is from 200 to 450 m²/g, preferably from 250 to 400 m²/g. The average particle size preferably is from 1 to 100 µm and more preferably from 1 to 75 µm. Particle sizes of 1 to 10 µm can also be advantageous, and have to be tested against processability (e.g. in packed columns). Pentasil zeolites are preferred, for example Pentasil/ZSM-5 (MFI) available from Clariant.

When the at least one adsorbant is silica, the silica is preferably present in the form of amorphous silica. Examples include MaxFlo® products obtainable from Agrilectic.

When the at least one adsorbant is Al₂O₃, it generally is preferred that the Al₂O₃ is in the form of γ-Al₂O₃ or α-Al₂O₃. The Al₂O₃ preferably has a surface area of from 60 to 120 m²/g.

In a further aspect of the present invention, the at least one adsorbant substance is activated carbon. The activated carbon can be microporous, mesoporous or macroprorous, or mixtures of any of the foregoing. Preferably, the activated carbon is selected from microporous activated carbon or mesoporous activated carbon or a mixture of both. The term "micropores" denotes pores having a width smaller than 2 nm. The term "mesoporous" denotes pores having a width equal to or larger than 2 nm and equal to or smaller than 50 nm. The term "macroporous" denotes pores having a width larger than 50 nm. Preferred macroporous activated carbon according to the present invention can have a pore size of up to 1 mm width. The width denotes the limiting size of the pore, usually the smallest dimension of the pore; for example, the width of a cylindrical pore corresponds to its diameter. The activated carbon can be in powder form or in the form of fine granules with a particle size of less than 4 mm, and preferably less than 1 mm. Powdered activated carbon is preferably crushed or ground to particles passing an 80-mesh sieve (0.177 mm). The activated carbon can also be applied in granular form. Often, granular activated carbon passes a 20-mesh sieve (0.84 mm; pass rate 85%). Bead activated carbon (often supplied in diameters of 0.35 to 0.8 mm) is also suitable. For example, polymer-based spherical activated carbons, e.g. as provided under the trade name "Saratech"® from Blücher GmbH, Erkrath/Germany, can be applied. It is also possible to use extruded activated carbon. Activated carbon in powder or granule form is preferred. A preferred source for active carbons is cocoa nut shells.

In a further aspect according to the present invention, the at least one adsorbant is CaCO₃ or mixtures comprising CaCO₃ such as maerl calcareous.

According to one aspect according to the present invention, in the method according to the invention, when the at least one adsorbant substance is selected from the group consisting of zeolites, silica, Al₂O₃, TiO₂, activated carbon and CaCO₃, wherein activated carbon is preferred, the pH of the aqueous composition A before contact with the adsorbant substance is equal to or below the pKₐ of the substance D. According to another aspect according to the present invention, in the method according to the invention, when the at least one adsorbant substance is an ion exchange resin, the pH of the aqueous composition A before contact with the adsorbant substance is equal to or higher the pKₐ of the substance D. If the pH of the aqueous composition to be treated is undesirably high or low and/or it is intended to lower or increase the pH, it can be acidified by suitable acids, e.g. HCl, acetic acid or TFA, or treated with aqueous bases such as KOH or NaOH. The method according to the present invention can thus comprise a step of adjusting the pH to a value given above.

Generally, the method according to the invention can be applied to a very wide range of content of the compound D in the aqueous composition A. For example, the method according to the present invention can be applied to aqueous compositions with a content of compound D, preferably carboxylic acids of formula (I), of equal to or greater than 0.001% by weight to a content of equal to or lower than 80 by weight of compound D, wherein the total weight of the aqueous composition is set to 100 % by weight. In one preferred aspect, the method of the invention is be applied to aqueous compositions having a content of compound D equal to or lower than 5 % by weight, equal to or lower than 2 % by weight, or even equal to or lower than 1 % by weight; the content of compound D, preferably the acid of formula (I), can be equal to or higher than 0.001 % by weight, equal to or higher than 0.01 % by weight, or equal to or higher than 0.05 % by weight. Such contents are often found in waste water compositions obtained from manufacturing processes which comprise the manufacture of carboxylic acids of formula (I), their precursors or downstream products, or wherein carboxylic acids of formula (I), their precursors or downstream products are side products. Such contents can also be found in waste water compositions obtained from manufacturing processes which comprise the manufacture of fluorinated polymers. In another aspect, the method according to the invention can also be applied to aqueous compositions wherein the content of compound D, preferably carboxylic acids of formula (I), is greater than 5 % by weight, for example having a content of up to 10% by weight. The content of compound D may be higher, up to 40% by weight and even up to 80 % by weight. In one aspect, the method according to the invention can be performed after a step of concentration of the aqueous composition such that the content of compound D, preferably carboxylic acids of formula (I), is greater than 5 % by weight. The step of concentration can be, for example, a step of distillation, extraction or contacting the aqueous composition with a membrane.

According to one aspect of the present invention, the temperature during contacting the aqueous composition A and the at least one adsorbant generally is in a range of from the freezing point of the aqueous composition up to its boiling point. Preferably, the temperature of contact is equal to or higher than 0°C, more preferably, equal to or higher than 20°C. Preferably, the temperature at which the aqueous composition A is contacted with the at least one adsorbant is equal to or lower than 60 °C, more preferably equal to or lower than 50 °C.

In the method according to the present invention, the at least one step of contacting the aqueous composition A and at least one adsorbant can be performed in any apparatus well known in the art for contacting liquids and solids. For example, the at least one step can be performed in a batch reactor, preferably a stirred batch reactor, or a cascade thereof. The at least one step can be performed, optionally continuously, in a column or a multitude of columns. Such columns comprising adsorbant are sometimes also denoted as "cartridge". In one aspect, two or more parallel lines of reactors can be used, as mentioned above, to allow continuation of the contact in case of malfunction of one of the lines, exhaustion of the adsorbant or maintenance such as cartridge replacement and/or regeneration.

The method according to the invention generally leads to an advantageous reduction of content of compound D, preferably of formula (I), in the aqueous composition A. Depending of the contact time, amount of adsorbant, stirring, height of columns, number of reactors and columns, and other parameters of solid/liquid contact, an advantageous amount of compound D contained in the aqueous composition can be removed. Often, at least 25% of the compound of compound D is removed by the process of the invention. More preferably, at least 50 % are removed. More preferably, at least 75 % of the content of compound of compound D initially present in the aqueous composition A are removed using the method of the invention. More preferably, equal to or more than 85 % are removed. It is even possible to remove equal to or more than 90 % of the compound D. The percentages given are related to the combined content of at least one compound D in the aqueous composition initially present in composition A before the method of the present invention is applied set to 100%.

The invention also concerns a process for the manufacture of a chemical compound C comprising a step in which a aqueous composition A is formed as a secondary product, and which further comprises the method for providing an aqueous composition with a reduced content of at least one compound D, selected from carboxylic acids having the formula (I) R-C(O)OH and fluorinated surfactants. Such processes for the manufacture of a compound C can be, for example: Processes for the manufacture of fluorosubstituted and chlorofluorosubstituted alkyl carboxylic acid halides which can, for example, be manufactured from fluorohydrocarbons or chlorofluorohydrocarbons via photo oxidation in the presence of absence of chlorine, see US-A-5,5545,298 and US-A-5,919,341; processes for the manufacture of acid anhydrides of carboxylic acids of formula (I) which can be prepared, for example, according to the process as laid out in US2016/0122273; such acid anhydrides can be used, for example, in the manufacture of heterocyclic compounds as published in WO2009149188; processes for the manufacture of acid esters produced from acid halides of carboxylic acids of formula (I) as in US-5,405,991; processes for the manufacture of alkenones which can be obtained from acid halides and vinyl ethers, see US-7,405,328 and US-A-8,519,195; processes for the manufacture of fluorinated polymers . In all such and other industrial processes, there is the potential danger that resulting waste water, originating directly from process waste of washing water of waste gas washers, have a content of the compound of formula (I), in particular fluoroalkyl carboxylic acids or chlorofluoroalkyl carboxylic acids, too high to be disposed of without further reduction of the content of (I). According to one aspect, the chemical compound C is a compound comprising at least one R-C(O) group, wherein R is defined as above. Preferably, the compound C is selected from the group consisting of compound (I), a compound of formula R-C(O)-O-C(O)-R (II), a compound of formula R-C(O)-X (III), wherein X is a halide selected from the group Cl, Br and F, and a compound of formula R-C(O)-OR' (IV), wherein R' is a group selected of an alkyl group or an aryl group. The compound of formula (I) preferably is selected from the group consisting of trifluoroacetic acid, trifluoroacetic acid anhydride, trifluoroacetic acid chloride, trifluoroacetic acid fluoride and trifluoroacetic acid bromide, wherein trifluoroacetic acid anhydride and trifluoroacetic acid chloride are preferred. Further processes for the manufacture of a compound C can be processes for the manufacture of fluoropolymers and aqueous fluoropolymer dispersions. Fluorinated surfactants are employed, for example, in the emulsion polymerisation leading to aqueous colloidal dispersions of fluorinated polymers.

Non-limiting examples of fluorinated surfactants include: (a) CF₃(CF₂)ₙ₀COOM', wherein n₀ is an integer ranging from 4 to 10, preferably from 5 to 7, preferably n₀ being equal to 6, and M' representing NH₄, Na, Li or K, preferably NH₄; (b) [R₁-Oₙ-L-A⁻]Y⁺, wherein: R₁ is a linear or branched partially or fully fluorinated aliphatic group which may contain ether linkages, n is an integer equal to 0 or 1, L is a linear or branched alkylene group which may be nonfluorinated, partially fluorinated or fully fluorinated and which may contain ether linkages, A⁻ is an anionic group selected from the group consisting of carboxylate, sulfonate, sulfonamide anion, and phosphonate, and Y⁺ is hydrogen, ammonium or alkali metal cation. In class (b) mention can be specifically made of: (b-1) T-(C₃F₆O)ₙ₁(CFYO)ₘ₁CF₂COOM", wherein T represents a Cl atom or a perfluoroalkoxyde group of formula CₓF_{2x+1-x'}Cl_{x'}O, wherein x is an integer ranging from 1 to 3 and x' is 0 or 1, n₁ is an integer ranging from 1 to 6, m₁ is 0 or an integer ranging from 1 to 6, M" represents NH₄, Na, Li or K and Y represents F or -CF₃; (b-2) R_{f}-(OCF₂CF₂)ₖ₋₁-O-CF₂-COOXₐ (IA) wherein R_{f} is a C₁-C₃ perfluoroalkyl group comprising, optionally, one or more ether oxygen atoms, k is 2 or 3 and Xₐ is selected from a monovalent metal and an ammonium group of formula NR^{N}₄, wherein R^{N}, equal or different at each occurrence, is a hydrogen atom or a C₁-C₃ alkyl group (b-3) F-(CF₂CF₂)ₙ₂-CH₂-CH₂-X*O₃M"', wherein X* is a phosphorus or a sulphur atom, preferably X* being a sulphur atom, M'" represents NH₄, Na, Li or K and n₂ is an integer ranging from 2 to 5, preferably n₂ being equal to 3; (c) Q-R_{bf}-Y bifunctional fluorinated surfactants, wherein Q and Y, equal to or different from each other, have formula -(O)ₚCFY"-COOM*, wherein M* represents NH₄, Na, Li or K, preferably M* representing NH₄, Y" is F or -CF₃ and p is 0 or 1, and R_{bf} is a divalent (per)fluoroalkyl chain or (per)fluoropoly-ether chain such that the number average molecular weight of Q-R_{bf}-Y is in the range of from 300 to 1800; (d) cyclic fluorocompound of formula (II): 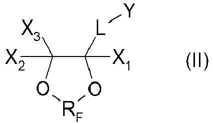 wherein X₁, X₂ and X₃, equal to or different from each other, are independently selected from the group consisting of H, F and C₁-C₆ (per)fluoroalkyl groups, optionally comprising one or more catenary or non-catenary oxygen atoms, L is a bond or a divalent group, R_{F} is a divalent fluorinated C₁-C₃ bridging group, and Y is an anionic functionality; and (e) mixtures thereof.

The invention concerns further an aqueous composition B with a content of compound D, wherein D is defined as before, preferably wherein D is a compound of formula (I), wherein the content of compound D is equal to or lower than 5% by weight, preferably equal to or lower than 1% by weight, more preferably equal to or lower than 0.5% by weight, and even more preferably equal to or lower than 0.1% by weight wherein the sum of the content of water and compound D is set to 100%. These levels of compounds D can, as has been found, advantageously be achieved, which is particularly significant when aqueous waste streams comprising D are concerned.

It is possible with the process according to the present invention to achieve very low levels of compound of formula D in aqueous compositions, in particular in aqueous waste streams, in a practical and economical manner. Adsorbents used in the process can often be recycled. Waste streams comprising components D, in particular compounds of formula (I), can effectively be treated to be reduced in content such that they are compatible with further use, treatment or disposal. The process according to the present invention also applies for the reduction of levels of compounds D in aqueous compositions A to obtain an aqueous composition B with a reduced content of at least one compound D, wherein the aqueous composition A originates from ground water or surface water such as lakes or rivers.

All patents and patent applications cited above are incorporated herein by reference. Should the disclosure of any of the patents, patent applications, and publications that are incorporated herein by reference conflict with the present description to the extent that it might render a term unclear, the present description shall take precedence.

The following examples will describe the invention in further detail without the intention to limit it.

### Examples

### Example 1: Removal of TFA with anionic resin

A column with a diameter of 50.4 mm and a height of 1200 mm was filled with 2 liters of resin A100 from Purolite (weak basic anionic resin). An aqueous effluent at pH 8.5 containing 30 mg/l of trifluoroacetic acid, 14 mg/l of fluoride, 2050 mg/l of sulfate and 650 mg/l of chloride was fed at 4 liters per hour (2 bed volumes/h). Samples were taken at the outlet between 2 and 90 bed volumes (1 to 45 hours). These samples were analysed by ionic chromatography to determine residual concentrations of chloride, sulfate, fluoride and trifluoroacetic acid.

Results in the graph below are expressed giving ratio between residual concentration and initial concentration in order to standardize data.

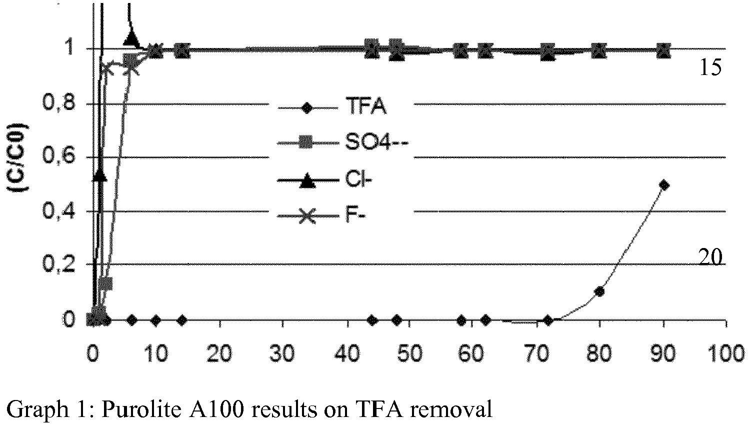

As can be seen in Graph 1, more than 70 bed volumes are run with excellent removal of TFA, and even after 90 cycles, the amount of TFA removed is approximately 50%. The Purolite resin was regenerated by feeding 6 litres (3 bed volumes) of 5% HCl at counter current. To neutralise residual acidity, 2 bed volumes of caustic soda NaOH 3% and the 2 bed volumes of deionised water were fed at counter current.

### Example 2: Batch removal of TFA with Ion Exchange resins.

200 mL of an aqueous composition with a content of 650 mg/L of TFA and a pH of 0 is agitated for 6h after addition of 25 mL (measured under water) of ion exchange resin at room temperature. Ion exchange resins tested are selected from DIAION™ WA20, WA21J, WA30, and Purolite® A835. A composition with a reduced TFA content is obtained.

### Example 3: Batch removal of TFA with TiO₂.

P-25 TiO₂ from Degussa powder is pressed to obtain a 1 mm thick disc. This disc is then crumbled and sieved to achieve 200-500 µm pellets. The TiO₂ is then heated to 400°C. The cooled material is packed into a column of 2 cm in diameter and 15 cm length. Analytical determination shows the TiO₂ to have 57 ± 3 m²/g (BET). The column is rinsed with demineralized water, and 200 mL of an aqueous composition with a content of 650 mg/L of TFA and a pH of 0 is passed through to yield a composition with a reduced TFA content.

### Example 4: Batch removal of TFA with Al₂O₃.

α-Al₂O₃ particles from Alfa Aesar loaded into a column of 2 cm in diameter and 15 cm length. Analytical determination shows the α-Al₂O₃ to have 11.9 m²/g (BET). The column is rinsed with demineralized water, and 200 mL of an aqueous composition with a content of 650 mg/L of TFA and a pH of 0 is passed through to yield a composition with a reduced TFA content.

### Example 5: Batch removal of TFA from solution comprising Cl⁻ and SO4²⁻

The aqueous composition A used in this experiments contained 650 mg/L of TFA; 51.5g/L Cl⁻; 2064 mg/L of SO4²⁻ and 4mg/L F⁻. The initial pH was 0.

200 ml of this solution was agitated for 6h after addition of 4g of several commercially available activated carbons.

Characteristics of the activated carbons:

| AC | BET surface m²/g | Bulk density | Form |
|---|---|---|---|
| Norit Row 0.8 supra | 1300 | 0.4 | Extruded |
| Acticarbon NCL 1240 | 1050 | 0.5 | Granulated |
| DONAU Hydraffin CC 8x30 | undetermined | 0.45 | Granulated |

Results of the tests:

| AC | TFA mg/L | Cl⁻ g/L | SO4²⁻ mg/L | F⁻ mg/L |
|---|---|---|---|---|
| Initial solution | 650 | 51.5 | 2064 | 4 |
| Norit Row 0.8 supra | 229 | 49.5 | 2082 | 5 |
| Acticarbon NCL 1240 | 252 | 49.3 | 1985 | 5 |
| DONAU Hydraffin CC 8x30 | 258 | 48.6 | 2024 | 5 |

The pH after treatment in all tests was 0.2. The tests demonstrate the effectivity of the ACs even in the presence of high amounts of anions.

### Example 6: Continuous removal of TFA with Norit Row 0.8 supra

The aqueous composition A used in this experiments contained 650 mg/L of TFA; 51.5g/L Cl⁻; 2064 mg/L of SO4²⁻ and 4mg/L F⁻. The aqueous composition A was passed through the bed at a flow rate of 0.015 m/h were passed through the AC bed. In this manner, 0.25 volumes of solution were passed per volume of AC per hour ("VVH"). Initially, the content of TFA in the obtained solution after treatment was 0. Results are expressed in Graph 2 giving ratio between residual concentration and initial concentration in order to standardize data (C/C₀). After approximately 18 volumes of solution per volume of AC had been treated, a first breakthrough of TFA was observed. After approximately 25 volumes of solution per volume of AC, still 60% of the TFA contained were adsorbed.

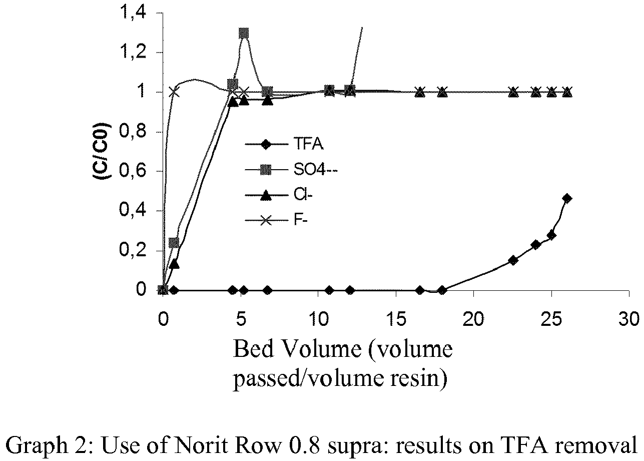

### Example 7: Batch removal of TFA with zeolite 13X.

Commercial synthetic zeolite 13X (Sigma-Aldrich, 3.2 mm pellets, Si/Al=1.2) are ground in a mortar and sieved to particle diameter of 75-150 µm. The particles were activated in a static oven at 320 °C for 24 hours. 100 mL of an aqueous solution containing 3 wt% trifluoroacetic acid is contacted with 2 grams of the zeolite at 35°C while shaking the flask at 150 rpm. Samples of the solution are titrated with 0.5 M aq. NaOH to determine the effectivity of the adsorption of the TFA on the zeolite.

The zeolite adsorbant can be regenerated heating in a static oven at 300 °C for 24 hours.

### Example 8: Removal of TFA from an aqueous composition with different active carbon species and specific adsorbent

100 g of an aqueous composition with various contents of TFA and a pH of 0 were agitated for 24h after addition of 5 g adsorbent given in the table below at ambient temperature. The mixtures were filtered and the amount of TFA in the filtrate was determined by Ionic Chromatography measurement.

ORGANOSORB® adsorbants were purchased from Desotec; Colorsorb® adsorbants were purchased from Jacobi; AQUACARB™ and CYCLECARB® adsorbants were purchased from Chemviron Carbon; Lewatit® was purchased from Lanxess.

| adsorbent | Content of TFA before treatment in ppm | Content of TFA after treatment in ppm |
|---|---|---|
| ORGANOSORB® lOCO | 609 | 64 |
| ORGANOSORB® 11 AL-CO | 567 | 62 |
| ColorSorb® CP2 | 816 | 111 |
| ColorSorb® BP2 | 816 | 262 |
| ColorSorb® HP-120 | 816 | 318 |
| AQUACARB™ 207C | 761 | 100 |
| CYCLECARB® 601 | 856 | 101 |
| CYCLECARB® 401 | 856 | 181 |
| SARATECH® 100772 | 609 | 57 |
| SARATECH® 102 282 | 609 | 75 |
| SARATECH® 101373 | 545 | 50 |
| Lewatit® AF 5 | 545 | 71 |

### Example 9: Removal of Cl(C₃F₆O)ₙCF₂COONa (FLUOROLINK 7800 SW) with anionic resin

200 mL of an aqueous solution of 30 mg/l of Cl(C₃F₆O)ₙCF₂COONa is treated at room temperature under stirring with 50 mL of resin A100 from Purolite (weak basic anionic resin). The resin is filtered off.

### Example 10: Removal of ammonium perfluoro-octanoate from an aqueous composition with an active carbon species

100 g of an aqueous composition with 900 ppm ammonium perfluoro-octanoate is agitated for 24h after addition of 5 g ORGANOSORB® lOCO at ambient temperature. The mixture is filtered to retrieve an aqueous composition with a reduced content of ammonium perfluoro-octanoate.

## Claims

1. A method for providing an aqueous composition B with a reduced content of at least one compound D selected from carboxylic acids having the formula (I) R-C(O)OH wherein R is selected from the group consisting of C1 to C9 alkyl groups substituted by at least 1 fluorine atom and fluorinated surfactants, wherein the method comprises at least one step wherein an aqueous composition A with a first content of at least one compound D selected from carboxylic acids of formula (I) and fluorinated surfactants is contacted with at least one adsorbant substance selected from ion exchange resins, zeolites, silica, Al₂O₃, TiO₂, activated carbon and CaCO₃ to obtain an aqueous composition B with a second, reduced content of at least one compound D having the formula (I), R-C(O)OH and/or a fluorinated surfactant.

2. The method according to claim 1, wherein the at least one adsorbant substance is an ion-exchange resin with a macroporous pore type.

3. The method according to claim 1 or 2, wherein the at least one adsorbant substance is an ion-exchange resin with a polyacrylic or polystyrene-DVB (divinylbenzene) matrix.

4. The method according to anyone of claims 1 to 3, wherein the at least one adsorbant substance is a basic ion-exchange resin.

5. The method according to claim 1, wherein the at least one adsorbant substance is selected from the group consisting of zeolites, silica, Al₂O₃ and TiO₂.

6. The method according to claim 5, wherein the Al₂O₃ is γ- Al₂O₃ or α-Al₂O₃.

7. The method according to claim 5 or 6, wherein the Al₂O₃ has a surface area of from 60 to 120 m²/g.

8. The method according to claim 1, wherein the at least one adsorbant substance is activated carbon.

9. The method according to anyone of claims 1 to 8, wherein the at least one compound D is a carboxylic acid having the formula (I) R-C(O)OH, preferably wherein R is a C1 to C3 alkyl group substituted by at least 1 fluorine atom.

10. The method according to claim 9, wherein R is selected from the group consisting of C1 alkyl substituted by 2 or 3 fluorine atoms, C2 alkyl substituted by at least 3 fluorine atoms or C3 alkyl substituted by at least 4 fluorine atoms, preferably wherein R is selected from the group consisting of CF₃, C₂F₅ and C₃F₈.

11. The method according to claim 9, wherein R is selected from the group consisting of C5 alkyl and C6 alkyl group substituted by at least six fluorine atoms.

12. The method according to anyone of claims 1 to 11, wherein the aqueous composition A contains equal to or less than 5 % by weight of compound D, preferably wherein compound D is a carboxylic acid having the formula (I).

13. Process for the manufacture of a chemical compound C comprising a step in which a aqueous composition A is formed as a secondary product, and which further comprises the method according to anyone of claims 1 to 12.

14. The process according to claim 13, wherein the chemical compound C is a compound comprising at least one R-C(O) group, wherein R is defined in anyone of claims 1 to 13, preferably wherein the compound C is selected from the group consisting of compound (I), a compound of formula R-C(O)-O-C(O)-R (II), a compound of formula R-C(O)-X (III), wherein X is a halide selected from the group Cl, Br and F, and a compound of formula R-C(O)-OR' (IV), wherein R' is a group selected of an alkyl group or an aryl group.

15. An aqueous composition B with a content of compound D wherein compound D is defined as in any of claims 1 to 13, wherein the content of compound D is equal to or lower than 5% by weight.
